# EUROPÄISCHE PATENTSCHRIFT

(11) **EP 2 137 053 B1**
(45) Veröffentlichungstag und Bekanntmachung des Hinweises auf die Patenterteilung: **27.11.2013**
(21) Anmeldenummer: 08715722.8
(22) Anmeldetag: 11.02.2008
(51) Int. Cl.: B62D 65/02, B62D 15/00, B60B 19/00

(54) **VERFAHREN UND VORRICHTUNG ZUM BEFÖRDERN BEWEGLICHER WERKZEUGE**
METHOD AND DEVICE FOR CONVEYING MOVABLE TOOLS
PROCÉDÉ ET DISPOSITIF DE TRANSPORT D'OUTILS MOBILES

(30) Priorität: 14.02.2007 DE 202007002365 U
(43) Veröffentlichungstag der Anmeldung: 30.12.2009
(73) Patentinhaber: KUKA Roboter GmbH, 86165 Augsburg (DE)
(72) Erfinder: NÜCHTER, Elmar, 86167 Augsburg (DE)
(74) Vertreter: Patentanwälte Funk & Böss GbR
(86) Internationale Anmeldenummer: PCT/EP2008/001008
(87) Internationale Veröffentlichungsnummer: WO 2008/098719

(56) Entgegenhaltungen:
- EP-A- 0 727 345
- EP-A- 1 293 421
- EP-A2- 0 147 602
- JP-A- 2003 127 605
- US-A1- 2001 035 449

## Beschreibung

Die Erfindung betrifft ein Verfahren und eine Vorrichtung zum Befördern beweglicher Werkzeuge mit den Merkmalen im Oberbegriff des Verfahrens- und Vorrichtungs-hauptanspruchs.

Aus der Praxis sind Bearbeitungsstationen bekannt, z.B. Framingstationen oder Geostationen zum Fügen von Fahrzeugkarosserien, die mehrere bewegliche Werkzeuge, insbesondere Spannrahmen, besitzen, mit denen die Karosseriebauteile an einer Arbeitsstelle gespannt werden. Für den Transport der Spannrahmen ist eine Fördereinrichtung vorgesehen, die als Schienenbahn ausgeführt ist und ggf. einen quer dazu beweglichen Zustellschlitten aufweist.

Die EP 0 147 602 B1 beschreibt eine Transportvorrichtung mit mindestens einem Rahmenteil, welcher gegenüber einem anderen Rahmenteil verstellbar ist. Die Transportvorrichtung weist einzeln angetriebene Antriebsräder mit schief angeordneten Bodenberührungsorganen auf, derart, dass die Transportvorrichtung in irgendeine Richtung bewegt werden kann, wobei mindestens ein Antriebsrad an einem der Rahmenteile so angeordnet ist, dass der erwähnte Rahmenteil sich gegenüber dem anderen Rahmenteil bewegen kann.

Es ist Aufgabe der vorliegenden Erfindung, eine verbesserte Fördertechnik und eine verbesserte Bearbeitungsstation aufzuzeigen.

Die Erfindung löst diese Aufgabe mit einer Fördereinrichtung für bewegliche Werkzeuge, insbesondere Spannrahmen, an einer Bearbeitungsstation für Werkstücke, insbesondere Karosseriebauteile, bei der die Fördereinrichtung ein oder mehrere lenkbare und omnidirektional bewegliche Fördergeräte aufweist, wobei die Fördereinrichtung einen an eine Arbeitsstelle an der Bearbeitungsstation angebundenen Rahmenförderer aufweist, und wobei das Fördergerät für den Rahmentransport zwischen einem Rahmenmagazin und einem Rahmenförderer vorgesehen ist. Die Aufgabe wird außerdem gelöst durch eine Bearbeitungsstation für Werkstücke, insbesondere Karosseriebauteile, wobei mehrere bewegliche Werkzeuge, insbesondere Spannrahmen, und eine Fördereinrichtung hierfür vorgesehen sind, wobei die Fördereinrichtung ein oder mehrere lenkbare und omnidirektional bewegliche Fördergeräte aufweist. Bei einem erfindungsgemäßen Verfahren zum Befördern von beweglichen Werkzeugen, insbesondere Spannrahmen, an einer Bearbeitungsstation für Werkstücke, insbesondere Karosseriebauteile, werden die Werkzeuge zumindest bereichsweise mit mindestens einem lenkbaren und omnidirektional beweglichen Fördergerät transportiert.

Die beanspruchte Fördertechnik und die damit ausgerüstete Bearbeitungsstation haben den Vorteil einer technischen Vereinfachung in Verbindung mit einer höheren Beweglichkeit und Funktionalität. Die lenkbaren und omnidirektional beweglichen Fördergeräte können sich auf kleinsten Raum bewegen und dabei beliebige lineare oder gekrümmte Wege fahren. Sie können sich sogar am Platz um die eigene Hochachse drehen. Für das Handhaben von Werkzeugen, insbesondere von Spannrahmen, sind dies optimale Eigenschaften. Die omnidirektionalen Fördergeräte können einzeln oder in Verbindung mit anderen Komponenten der Fördereinrichtung, z.B. einem schienengebundenen Rahmenförderer, die Transport- und Handhabungsaufgaben für die Spannrahmen wahrnehmen. Die Fördergeräte können hierbei auch zum Ein- und Auslagern der Spannrahmen an ein oder mehreren Rahmenmagazinen benutzt werden. Durch die omnidirektionale Beweglichkeit können die Fördergeräte auch die Rahmenzustellung an der Arbeitsstelle ausführen und z.B. durch eine Fahrbewegung einen Zustellhub bewirken.

Für die Aufnahme der Werkzeuge oder Spannrahmen auf den Fördergeräten können geeignete Trageinrichtungen in geeigneter Zahl und Ausbildung, ggf. mit einer Zustelleinrichtung, vorhanden sein. Zur Durchführung eines Rahmenwechsels und einer Relativbewegung des Spannrahmens gegenüber dem Fördergerät können ein oder mehrere Wechseleinrichtungen vorhanden sein, die wahlweise stationär oder auf dem Fördergerät angeordnet sein können.

Besonders günstig ist die Möglichkeit zur Anordnung mehrerer Trageinrichtungen oder Ladestellen auf einem Fördergerät. Hierdurch kann ein einzelnes Fördergerät einen kompletten Rahmentausch an der Arbeitsstelle durchführen und anschließend den ausgetauschten Rahmen abtransportieren. Hierdurch kann man mit einer sehr geringen Zahl an Fördergeräten, insbesondere mit einem einzigen Fördergerät, auskommen. Außerdem verringert sich der Platzbedarf. Derartige Fördereinrichtungen sind auch sehr beengten Bearbeitungsstationen einsetzbar.

Alternativ können mehrere Fördergeräte vorhanden sein, die mit ihren Funktionen beim Rahmenwechsel zusammenwirken.

Die Fördergeräte können als Flurfördergeräte ausgebildet sein. Durch die omnidirektionale Beweglichkeit bieten die Fördergeräte wesentlich vergrößerte Freiheiten zur Anordnung und Ausgestaltung der anderen Komponenten der Bearbeitungsstation. Insbesondere können ein oder mehrere Spannrahmenmagazine an beliebigen Stellen innerhalb oder außerhalb der Bearbeitungsstation und in beliebigen Entfernungen zur Arbeitsstelle angeordnet sein. Sie können auch beliebige Ausrichtungen haben. Bei den bislang üblichen schienengebundenen Rahmenförderern waren diesbezüglich die Zwänge wesentlich größer.

Der Einsatz omnidirektional beweglicher Fördergeräte vereinfacht insgesamt den Bauaufwand der Fördertechnik. Auf aufwändige stationäre Installationen, insbesondere Schiene oder andere Führungsbahnen, kann weitgehend verzichtet werden. Außerdem bieten die beanspruchten Fördergeräte eine wesentlich höhere Flexibilität, so dass Bearbeitungsstationen sich leichter und schneller im Bedarfsfall umrüsten oder erweitern lassen. Die Fördertechnik kann problemlos angepasst werden und mitwachsen. Auch eine Erhöhung der Spannrahmenzahl und eine Vergrößerung oder Multiplizierung von Rahmenmagazinen sind problemlos möglich.

Die Fördergeräte können erhöhte oder zusätzliche Funktionalitäten erhalten. Insbesondere können sie eine Hubeinrichtung aufweisen, um z.B. mehrstöckige Rahmenmagazine bedienen zu können. Sie können auch in Verbindung mit stationären, mehrstöckigen Rahmenwechslern an der Arbeitsstelle eingesetzt werden.

Ferner bieten die Fördergeräte die Möglichkeit, Bearbeitungsgeräte, insbesondere Roboter mitzuführen und an geeigneter Stelle, z.B. an der Arbeitsstelle der Bearbeitungsstation wirken zu lassen.

Die Fördergeräte können an der Bearbeitungsstation multifunktional eingesetzt werden. Sie können außer Spannrahmen beliebige andere Werkzeuge, z.B. Haltegestelle für Karosseriebauteile oder andere Werkstücke, Werkzeugmagazine für Fügeroboter an der Arbeitsstelle oder dergl. transportieren. Mit den Fördergeräten kann die bisherige stationäre Peripherie einer Bearbeitungsstation oder Fügestation in Teilen oder komplett beweglich gemacht werden.

In den Unteransprüchen sind weitere vorteilhafte Ausgestaltung der Erfindung angegeben.

Die Erfindung ist in den Zeichnungen beispielsweise und schematisch dargestellt. Im einzelnen zeigen:
- Figur 1 bis 4:: eine schematische Draufsicht auf eine Bearbeitungsstation mit omnidirektional beweglichen Fördergeräten in verschiedenen Ausführungsformen,
- Figur 5 bis 7:: verschiedene Ansichten eines Fördergerätes,
- Figur 8:: eine Explosionsdarstellung eines Mecanum-Rads und
- Figur 9a bis 9d:: verschiedene Bewegungsmöglichkeiten des Fördergerätes.

Die Erfindung betrifft eine Fördereinrichtung nebst Verfahren für bewegliche Werkzeuge (2,3), insbesondere Spannrahmen, und eine mit einer solchen Fördereinrichtung (11) ausgerüstete Bearbeitungsstation (1).

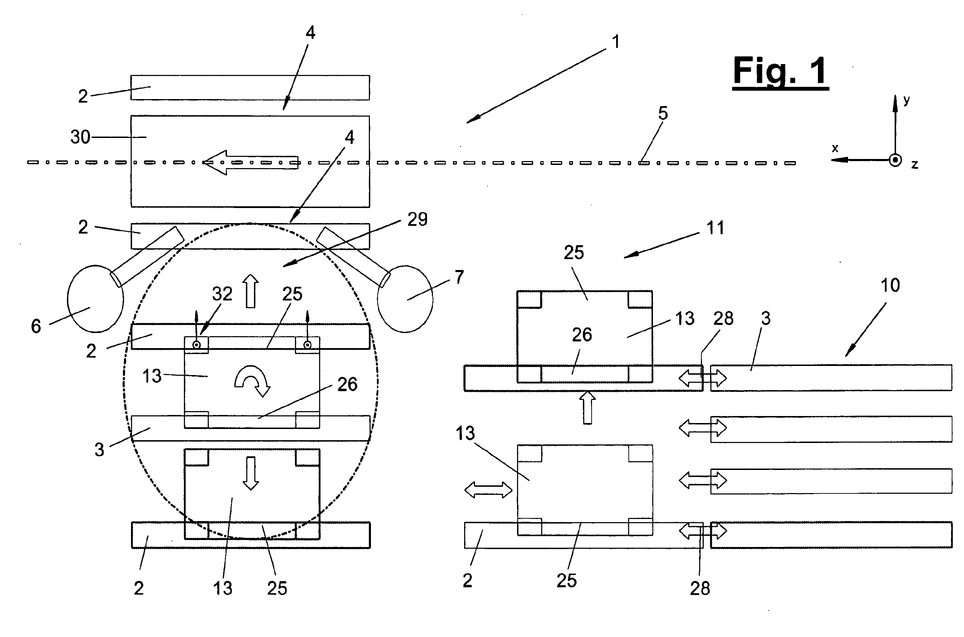

Eine derartige Bearbeitungsstation (1) ist in Figur 1 bis 4 schematisch dargestellt. Sie ist als Fügestation oder sogenannte Framingstation bzw. Geostationen ausgebildet und dient dem exakten Fügen von Werkstücken (30) beliebiger Art und Größe, bei denen es sich vorzugsweise um Karosseriebauteile von Rohkarosserien von Fahrzeugen handelt. Bei der gezeigten Framingstation werden z.B. Bodengruppen von Fahrzeugkarosserien mit einem geeigneten Förderer entlang einer Transferlinie (5) in x-Richtung in die Bearbeitungsstation (1) gebracht und dort mit weiteren Karosseriebauteilen, z.B. Seitenwänden und Dachteilen, komplettiert, gespannt und mittels Schweißen, Kleben oder dergl. Verbindungsprozessen gefügt.

Zum Spannen dienen Spannrahmen (2,3), die mit Spannwerkzeugen ausgerüstet sind und die in der Bearbeitungsstation (1) an einem Stationsgestell abgesteckt und exakt positioniert werden können. Mit den beweglichen Spannrahmen (2,3) können zugleich auch Bauteile, z.B. Seitenwände, zugeführt werden. Alternativ können die Bodengruppe und die Seitenwände sowie ggf. weitere Karosseriebauteile bereits lose vorpositioniert auf der Transferlinie (5) zugeführt werden. Das Spannen und Bearbeiten der Karosseriebauteile erfolgt in der Bearbeitungsstation (1) an der sogenannten Arbeitsstelle (4). Wenn beidseits der Transferlinie (5) gearbeitet wird, sind zwei solcher Arbeitsstellen (4) vorhanden. Es können alternativ auch mehr Arbeitsstellen (4) sein. Der Übersicht halber ist in den Zeichnungen nur die eine näher dargestellt. An den Arbeitsstellen (4) befinden sich ein oder mehrere Bearbeitungseinrichtungen (6,7,8,9) zur Bearbeitung der Werkstücke (30). Dies können z.B. mehrachsige Manipulatoren, insbesondere mehrachsige Industrieroboter, mit geeigneten Werkzeugen sein, z.B. sechsarmige Gelenkarmroboter mit Schweiß- oder Klebewerkzeugen. Die Werkzeuge können bei Bedarf gewechselt werden. Ferner ist der Einsatz von Werkern alternativ oder ergänzend zu mechanischen Bearbeitungseinrichtungen (6,7,8,9) möglich.

In der Bearbeitungsstation (1) können verschiedene Arten oder Typen von Werkstücken (30) bearbeitet bzw. gefügt werden. Hierfür sind entsprechend unterschiedliche Spannrahmen (2,3) vorhanden. Bei einem Typenwechsel müssen die Spannrahmen (2,3) ausgetauscht werden. Falls mit den Spannrahmen (2,3) Bauteile mitgeführt werden, kann ein Rahmentransport öfter stattfinden.

Für den Transport und die Handhabung der Spannrahmen (2,3) ist eine Fördereinrichtung (11) vorgesehen. Diese weist mindestens ein omnidirektional bewegliches Fördergerät (13,14) auf. Hierbei können auf jeder Seite der Transferlinie (5) ein oder mehrere solcher Fördergeräte (13,14) vorhanden sein. Das Fördergerät (13,14) besitzt einen omnidirektionalen Antrieb (31) und ist lenkbar. Es kann auf seiner Bewegungsebene, z.B. auf dem Anlagenboden, in allen Richtungen gelenkt und gesteuert werden. Es kann vorwärts, rückwärts und seitwärts sowie beliebige Kurven fahren und auf der Stelle drehen.

Die Bearbeitungsstation (1) weist ferner ein oder mehrere Rahmenmagazine (10) auf, in denen die verschiedenen Spannrahmen (2,3) bevorratet werden. Beispielsweise sind beidseits der Transferlinie (5) jeweils ein oder zwei Rahmenmagazine (10) vorhanden. Die Magazinzahl kann auch größer sein. Die Rahmenmagazine (10) können an beliebig geeigneter Stelle innerhalb oder außerhalb der Bearbeitungsstation (1) angeordnet sein.

Die Fördereinrichtung (11) ist für den Rahmentransport vom Rahmenmagazin (10) zur Arbeitsstelle (4) und zurück vorgesehen. Im Ausführungsbeispiel der Figuren 1 bis 3 bilden die omnidirektionalen Fördergeräte (13,14) die Fördereinrichtung (11) und besorgen den Rahmentransport zur Arbeitsstelle (4) und zurück.

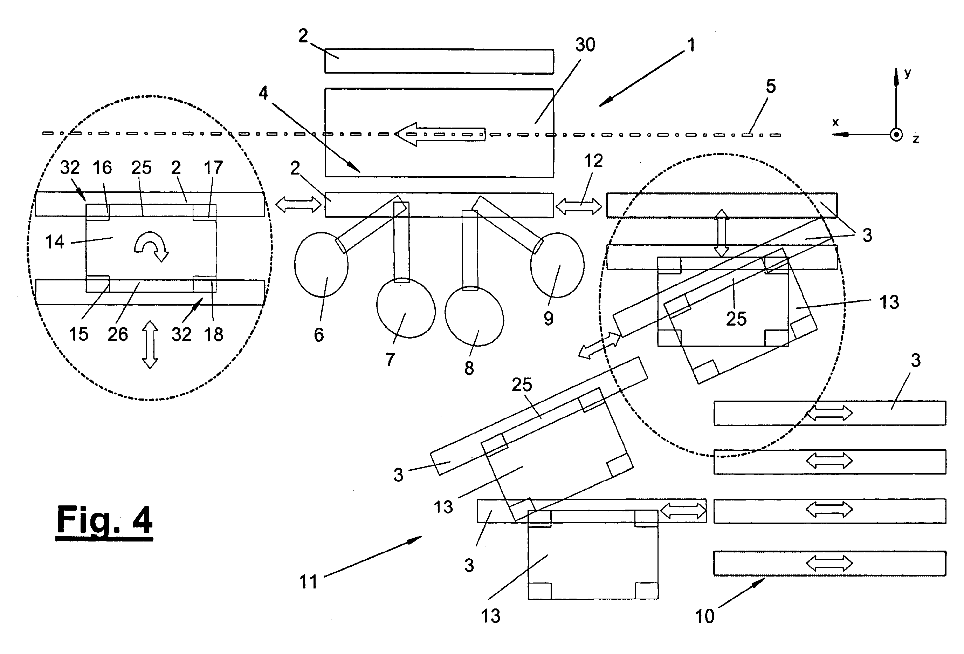

In der Variante von Figur 4 weist die Fördereinrichtung (11) zusätzlich noch einen Rahmenförderer (12) auf, der sich z.B. längs der Transferlinie erstreckt und mit dem die Spannrahmen (2,3) zur Arbeitsstelle (4) und von dort nach ein oder zwei Seiten zurück in eine Aufnahmeposition bewegt werden können. Der schlank bauende Rahmenförderer (12) ist z.B. ein schienengebundener Förderer, der auf ein oder beiden Seiten der Transferlinie (5) angeordnet sein kann. In diesem Fall besorgen die Fördergeräte (13,14) den Transport der Spannrahmen (2,3) vom Rahmenmagazin (10) zur Aufnahmeposition des Rahmenförderers (12) und zurück.

Das Fördergerät (13,14) weist ein oder mehrere Trageinrichtungen oder Ladestellen (25,26) für den jeweils mindestens einen Spannrahmen (2,3) auf. Im gezeigten Ausführungsbeispiel haben die in der Draufsicht z.B. im wesentlichen rechteckigen Fördergeräte (13,14) an geeigneter Stelle, z.B. an einer oder an beiden Längsseiten eine solche Trageinrichtung (25,26). Die Trageinrichtungen (25,26) weisen geeignete Positionier- und Fixiermittel auf, um den oder die aufgeladenen Spannrahmen (2,3) in einer vorgegebenen exakten Position während des Transports zu halten und für den Übergabe- oder Wechselvorgang freizugeben. Dies können z.B. Schienenstücke mit steuerbaren Klemmeinrichtungen oder dergl. sein. Die aufgeladenen Spannrahmen (2,3) ragen z.B. ein Stück seitlich über die Außenkontur des Fördergerätes (13,14) vor, so dass mit einer Fahr- und Vorschubbewegung des Fördergerätes (13,14) der jeweilige Spannrahmen (2,3) in Kontakt mit der Absteckung an der Arbeitsstelle (4) oder mit dem Rahmenförderer (12) an der Aufnahmeposition oder dergl. gebracht werden kann.

Die Trageinrichtung(en) oder Ladestelle(n) (25,26) können starr am Fördergerät (13,14) angeordnet sein. Sie können alternativ beweglich sein und eine Zustelleinrichtung (32) mit mindestens einer Bewegungsachse und einem Stellantrieb aufweisen. Dies kann z.B. eine Hubachse zum Heben und Senken des Spannrahmens (2,3) in z-Richtung sein, mit der z.B. der Spannrahmen (2,3) mit mindestens einem seitlich abstehenden Zapfen in eine als Aufnahmeprisma ausgebildete Absteckung an der Arbeitsstelle (4) eingehängt werden kann. Dies ermöglicht ein anschließendes Lösen der Trageinrichtung oder Ladestelle (25,26) vom Spannrahmen (2,3) und ein Entfernen des Fördergerät (13,14) von der Arbeitsstelle. Während der nachfolgenden Werkstückbearbeitung kann dann das Fördergerät (13,14) andere Aufgaben erledigen.

Alternativ oder zusätzlich kann die Zustelleinrichtung (32) eine horizontale Bewegungsachse mit Stellantrieb, z.B. in y-Richtung aufweisen. Hiermit kann der Spannrahmen (2,3) vom stehenden Fördergerät (13,14) zur Absteckung am Stationsgestell vorgeschoben und z.B. in dortige Aufnahmeöffnungen mit vorstehenden konischen Zapfen oder Indexen eingesteckt werden.

Die Trageinrichtung oder Ladestelle (25,26) oder die Zustelleinrichtung (32) kann außerdem eine Schwimmplatte oder eine Weichschaltung der Stellantriebe aufweisen, um etwaige kleine Positionsabweichungen bei der Rahmenzustellung ausgleichen zu können.

Für die Übernahme und Übergabe der Spannrahmen (2,3) aus und in den Rahmenspeicher (10) können ein oder mehrere Wechseleinrichtungen (28) vorhanden sein. Dies können z.B. angetriebene und steuerbare Schiebe- und Schwenk- oder sonstige Greifeinrichtungen sein, mit denen die Spannrahmen (2,3) hin und her bewegt werden können. Die Wechseleinrichtung (28) kann Bewegungshübe nach ein oder mehreren Achsen, z.B. horizontal und/oder senkrecht, ausführen.

Die Fördergeräte (13,14) können eine eigene mitgeführte Wechseleinrichtung (28) für die Spannrahmen (2,3) aufweisen. Die Wechseleinrichtung (28) kann mit der oder den Zustelleinrichtung(en) (32) kombiniert werden oder diese ersetzen. Alternativ oder zusätzlich kann die Wechseleinrichtung (28) stationär angeordnet sein und sich z.B. am Rahmenmagazin (10) befinden. Auch an anderen Stellen der Bearbeitungsstation (1) können Wechseleinrichtungen (28) angeordnet sein.

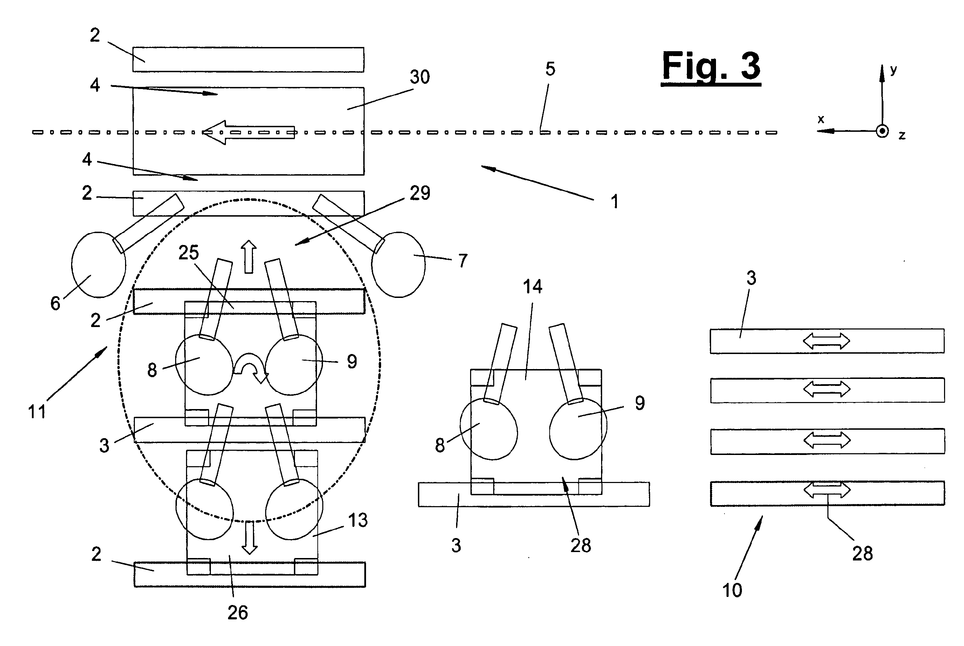

Das Fördergerät (13,14) weist ein Fahrgestell (24) mit einer an der Oberseite angeordneten Plattform auf, auf der sich die Trageinrichtungen (25,26) und ggf. auch die Wechseleinrichtung (28) befinden. Zusätzlich können auf dem Fördergerät (13,14) und der besagten Plattform ein oder mehrere Bearbeitungseinrichtungen (8,9) z.B. Gelenkarmroboter mit Werkzeugen, angeordnet sein. Figur 3 zeigt diese Variante. Die Bearbeitungseinrichtungen (8,9) können außerdem Handlingaufgaben wahrnehmen und z.B. die Zustelleinrichtung(en) (32) ersetzen.

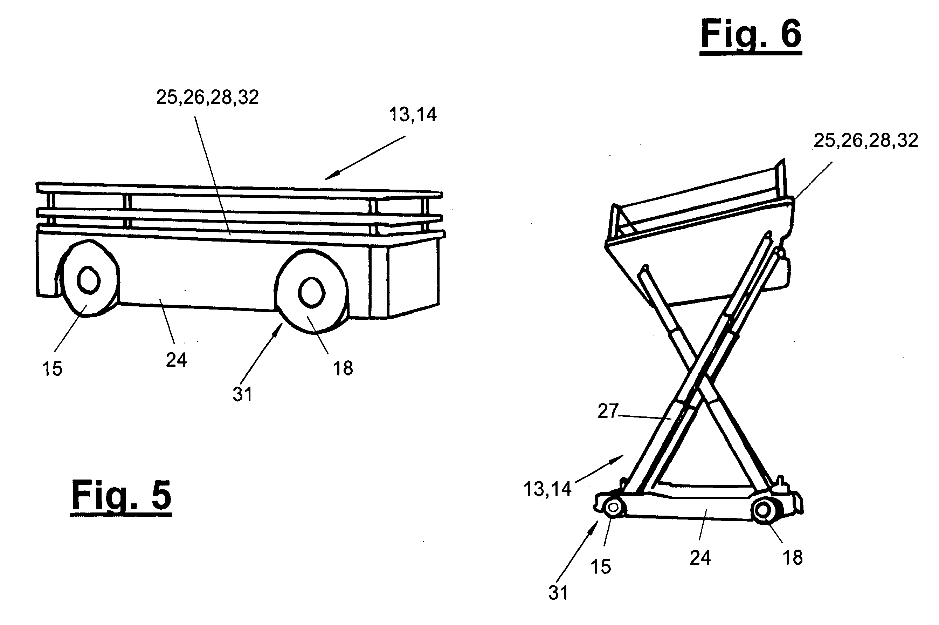

Das Fördergerät (13,14) kann ferner eine Hubeinrichtung (27) aufweisen, mit der beispielsweise die gesamte Plattform mit den Trageinrichtungen (25,26) und der Wechseleinrichtung (28) sowie ggf. auch den Bearbeitungseinrichtungen (8,9) gehoben und gesenkt werden können. Die Hubeinrichtung (27) ist steuerbar und weist ein oder mehrere geeignete Antriebe auf. Beispielsweise ist sie als hydraulisch betätigter Scherentisch ausgeführt. Figur 6 zeigt eine solche Ausführungsform.

Die omnidirektional beweglichen Fördergeräte (13,14) sind beispielsweise als Flurfördergeräte ausgebildet, die sich auf dem Stationsboden in vielen beliebigen Richtungen bewegen und außerdem auf der Stelle drehen können. Der omnidirektionale Antrieb (31) und dessen Antriebsmechanik für diese Bewegungsmöglichkeiten können unterschiedlich ausgebildet sein.

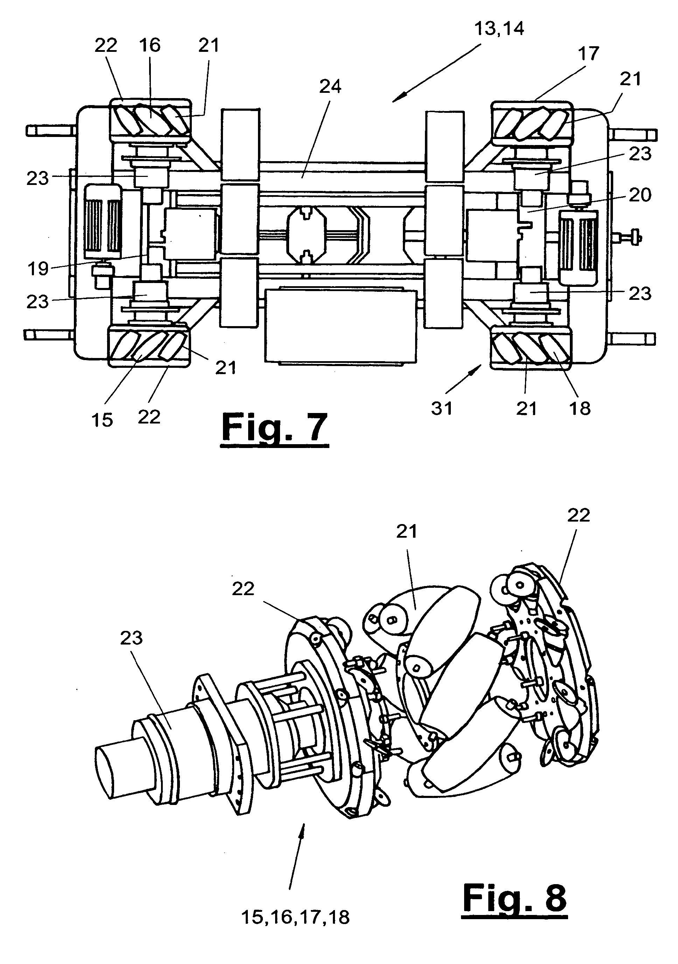

In der gezeigten Ausführungsform weist das Fördergerät (13,14) ein Fahrwerk mit mindestens einem Mecanum-Rad (15,16,17,18) auf, welches einen Rollenkranz (21) besitzt, dessen Rollen schräg zur Radachse ausgerichtet sind. Figur 7 und 8 zeigen diese Ausführungsform. Der Rollenkranz (21) mit den frei drehbaren Einzelrollen ist in einer Tragkonstruktion (22) mit zwei stirnseitigen Flanschplatten gehalten und gelagert. Das Mecanum-Rad (15,16,17,18) weist ferner einen Antrieb (23) und eine Bremse (nicht dargestellt) auf. Der Antrieb (23) besitzt einen geeigneten Motor, z.B. einen Elektromotor oder einen hydraulischen Motor oder dergl. und kann ferner mit einem Getriebe (nicht dargestellt) ausgestattet sein.

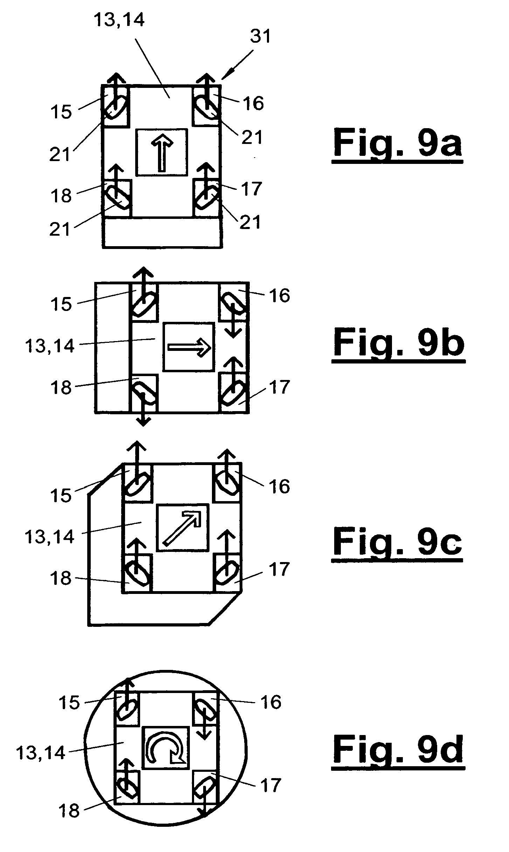

Wie Figur 7 und 9a bis 9d beispielhaft verdeutlichen, besitzt das Fördergerät (13,14) vier gleichmäßig im Rechteck verteilte Mecanum-Räder (15,16,17,18), wobei die in den Zeichnungen oberen und unteren Räder (15,16 und 17,18) auf gemeinsamen Achslinien (19,20) angeordnet sind. Alle vier Räder (15,16,17,18) werden eigenständig angetrieben und dabei gemeinsam gesteuert. Die schrägen Rollenkränze (21) der jeweils diagonal gegenüberliegenden Mecanum-Räder (15,17) und (16,18) weisen die gleiche Ausrichtung ihrer schrägen Rollen auf.

In Abwandlung der gezeigten Ausführungsformen kann ein Fördergerät (13,14) eine beliebig geeignete andere Zahl von Mecanum-Rädern aufweisen. Insbesondere können bei einer Rechteckanordnung ganzzahlige Vielfache von vier, z.B. acht oder zwölf, Mecanum-Räder vorhanden sein.

Die Mecanum-Räder (15,16,17,18) und der z.B. durch die Viereranordnung der Räder gebildete omnidirektionale Antrieb (31) sind beispielsweise entsprechend der US 3,876,255 oder der EP 0 147 602 A2 ausgebildet. Die Drehzahl und Drehrichtung der vier Räder (15,16,17,18) sind einzeln wählbar. Die Achsen der in der Außenkontur balligen Rollen sind z.B. in einem 45°-Winkel oder einem anderen geeigneten Winkel zur Längsachse des Fördergerätes (13,14) angebracht, wobei die Rollenachsen der auf der gleichen Achslinie (19,20) angeordneten Räder (15,16) und (17,18) einander in der Verlängerung schneiden.

Die Räder (15,16,17,18) stehen mit ihren frei drehbaren schrägen Rollen auf dem Untergrund auf und werden durch die Drehbewegung des Rollenkranzes (21) in Bewegung versetzt. Durch individuelle Wahl der Drehrichtung und der Drehzahl der einzelnen Räder (15,16,17,18) und ihrer Rollenkränze (21) entstehen Fortbewegungskräfte, die sich am einzelnen Mecanum-Rad (15,16,17,18) durch die schräg ausgerichteten Rollen in zwei Richtungen ausbilden. Durch die Überlagerung mit den Antriebskräften der anderen Räder können hierbei Bewegungsrichtungen für das Fördergerät (13,14) nach allen Richtungen und auch Drehbewegungen, sogar am Ort und um die eigene Achse, ausgeführt werden. Die vier Mecanum-Räder (15,16,17,18) des Fördergerätes (13,14) sind hierbei in den Abmessungen und in der Antriebstechnik gleich ausgebildet, wobei die Schrägausrichtungen der Rollen in der vorerwähnten Weise gewählt sind.

Figur 9a bis 9d zeigen Beispiele für die omnidirektionale Beweglichkeit der Fördergerätes (13,14). Das Fördergerät (13,14) kann in beliebig geeigneter Weise navigiert werden, z.B. durch eine automatische Steuerung auf dem Fördergerät (13,14), die ihre Steuer- und Fahrbefehle von einer übergeordneten Stationssteuerung per Funk oder in sonstiger beliebiger Weise erhält. Das Fördergerät (13,14) kann bei Bedarf auch per Hand mittels eines Joysticks und einer Datenfernübertragung zu den Antrieben (23) im Fahrgestell (24) gesteuert werden.

Im Ausführungsbeispiel von Figur 9a werden alle vier Räder (15,16,17,18) in der gleichen Drehrichtung und mit der gleichen Geschwindigkeit angetrieben. Hierdurch bewegt sich das Fördergerät (13,14) in Pfeilrichtung gerade nach vorn. In Drehrichtungsumkehr erfolgt eine Rückwärtsbewegung.

In der Variante von Figur 9b führt das Fördergerät (13,14) eine Seitwärtsbewegung aus, wobei die jeweils benachbarten Räder (15,16,17,18) in unterschiedlichen Richtungen drehen. Die diagonal gegenüberliegenden Räder (15,17) und (16,18) drehen hierbei in der gleichen Richtung. Die Drehrichtung der rechten Räder (16,17) ist aufeinander zugerichtet, wodurch sich das Fördergerät (13,14) in der gezeigten Weise seitlich nach rechts bewegt. Wenn die Drehrichtung der linken Räder (15,18) einander zugekehrt ist, bewegt sich das Fördergerät (13,14) nach links.

Figur 9c zeigt die Möglichkeit von Diagonalbewegungen. Alle Räder (15,16,17,18) drehen hierbei in der gleichen Richtung, wobei allerdings unterschiedliche Drehgeschwindigkeiten vorhanden sind. In der gezeigten Ausführung drehen die diagonal gegenüberliegenden Räder (15,17) mit höherer Drehzahl als die anderen diagonal gegenüberliegenden Räder (16,18), wodurch sich das Fördergerät (13,14) schräg nach rechts bewegt. Je nach dem wie groß die Drehzahlunterschiede zwischen den Rädern sind, ändert sich der Winkel der Schrägbewegung.

In Figur 9d ist noch die Variante einer Drehbewegung am Platz dargestellt. Hierbei drehen die linken Räder (15,18) paarweise in der gleichen Richtung und die rechten Räder (16,17) paarweise in der entgegengesetzten Richtung. Dies führt zu der dargestellten Drehbewegung des Fördergerätes (13,14) im Uhrzeigersinn.

In der Ausführungsform von Figur 1 ist ein einzelnes Fördergerät (13) vorhanden, welches den Rahmentransport vom Rahmenmagazin (10) zur Arbeitsstelle (4) besorgt. An der Arbeitsstelle (4) sind die dortigen Bearbeitungseinrichtungen (6,7) soweit voneinander distanziert angeordnet oder mit Zusatzachsen soweit auseinander bewegbar, dass eine Gasse (29) für die Durchfahrt des Fördergerätes (13) und des Spannrahmens (2,3) besteht.

Wenn ein Spannrahmen (2) gewechselt und gegen einen neuen Spannrahmen (3) getauscht werden soll, holt das Fördergerät (13) zunächst in der gestrichelt dargestellten Position den Spannrahmen (3) mittels der Wechseleinrichtung (28) aus dem Rahmenmagazin (10) und lädt ihn auf die Trageinrichtung (26). Die andere Trageinrichtung (25) ist frei. Sie dient zur Aufnahme des auszutauschenden Spannrahmens (2), der sich noch an der Arbeitsstelle (4) befindet. Hierzu fährt das Fördergerät (13) mit der Trageinrichtung (25) voraus in die Gasse (29), dockt den Spannrahmen (2) in der vorbeschriebenen Weise an, löst ihn mittels eines geeigneten Hubs und des Stellantriebs oder einer Zusatzeinrichtung vom Stationsgestell (4) und der Absteckung und lädt ihn auf die Trageinrichtung (25). Anschließend fährt das Fördergerät (13) ein Stück zurück, bis es die durch einen Pfeil symbolisierte 180°-Drehung um die zentrale Hochachse ausführen kann und fährt dann mit dem nun zur Transferlinie (5) weisenden neuen Spannrahmen (3) wieder in die Gasse (29) und übergibt ihn an der Arbeitsstelle (4) an das Stationsgestell und die dortige Absteckung. Diese Zustell- und Vorschubbewegungen können in gerader Vorwärtsfahrt ausgeführt werden. Wenn die Platzverhältnisse knapp und ggf. die Störkonturen schwierig sind, kann das Fördergerät (13) dank seiner omnidirektionalen Beweglichkeit auch eine kurvige Fahrbewegung in der Art eines Ein- und Ausfädelns durchführen.

Nach Abgabe des neuen Spannrahmens (3) fährt das Fördergerät (13) wieder zurück und in eine Übergabeposition an das Rahmenmagazin (10), wo der ausgetauschte Spannrahmen (2) an einer leeren Aufnahmestelle in das Rahmenmagazin (10) mittels einer Wechseleinrichtung (28) übergeben wird. Der Spannrahmen (2) kann hierbei z.B. horizontal überschoben werden.

In einer nicht dargestellten Variante von Figur 1 kann das Rahmenmagazin (10) mehrstöckig sein, wobei durch die Hubeinrichtung (27) des Fördergerätes (13,14) der Spannrahmen (2,3) auf das Etagenniveau des Rahmenmagazins (10) gehoben und dort durch eine im wesentlichen horizontale Übergabebewegung hin oder her bewegt werden kann.

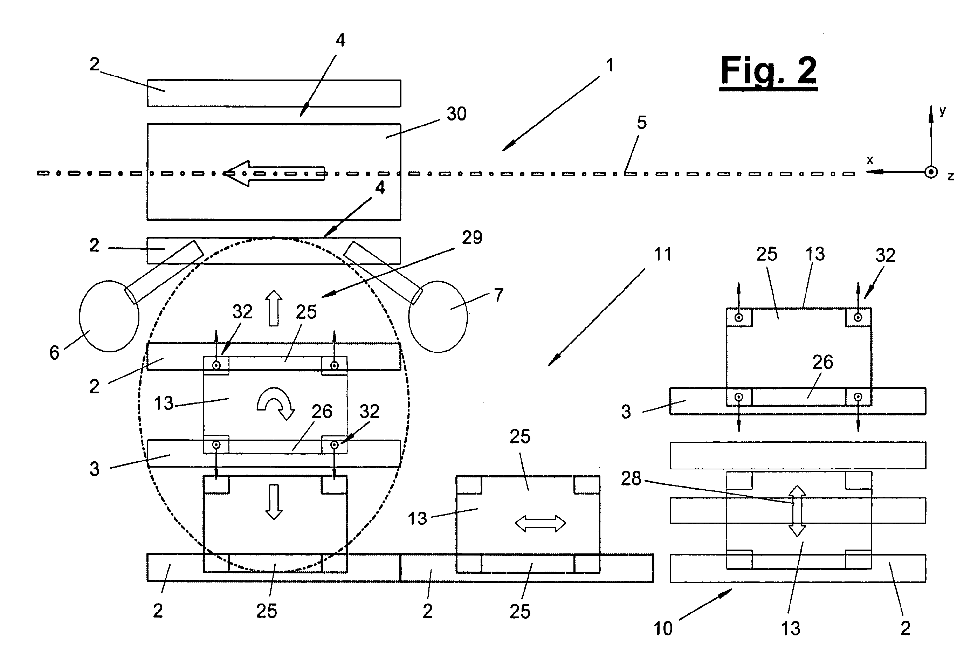

Figur 2 zeigt eine Variante der Bearbeitungsstation von Figur 1 mit einem anderen Rahmenmagazin (10) und einer anderen Wechseleinrichtung (28). Das Rahmenmagazin (10) ist aufgeständert, wobei die Rahmen (2,3) mit Abstand vom Anlagenboden angeordnet sind, so dass das Fördergerät (13) unter den Spannrahmen (2,3) durchfahren kann. Die Wechseleinrichtung (28) kann in diesem Fall als Hubeinrichtung am Rahmenmagazin (10) oder am Fördergerät (13) ausgebildet sein, mit dem der Spannrahmen (2,3) in der oben liegenden Rahmenaufnahme eingehängt und ausgehängt wird. Das Rahmenmagazin (10) kann außerdem als bewegliches Umlaufmagazin ausgebildet sein, in dem die Spannrahmen (2,3) in einer geschlossenen oder offenen Umlaufbahn transportiert werden. Auf diese Weise kann z.B. der jeweils benötigte neue Spannrahmen (3) an der Vorderseite des Rahmenmagazins (10) bereit gestellt und an das Fördergerät (13) übergeben werden.

Figur 3 zeigt eine Variante entsprechend Figur 1, bei der auf dem Fördergerät (13) zusätzlich ein oder mehrere, z.B. zwei Bearbeitungseinrichtungen (8,9), z.B. Fügeroboter, angeordnet sind und mitbewegt werden. In diesem Fall kann das Fördergerät (13) nach dem Rahmentausch an der Arbeitsstelle (4) verbleiben, wobei die Bearbeitungseinrichtungen (8,9) in die Bearbeitung des Werkstücks (30) eingebunden werden. Die Trageinrichtung(en) oder Ladestelle(n) (25,26) können in diesem Fall starr angeordnet sein oder ggf. eine Schwimmplatte oder dgl. aufweisen. Bei einer solchen Variante ist es günstig, mit mehreren Fördergeräten (13,14) zu arbeiten, wobei beim Austausch der Spannrahmen (2,3) auch die Fördergeräte (13,14) gewechselt werden. Ein kombinierter und abwechselnder Betrieb von zwei oder mehr Fördergeräten (13,14) ist auch bei den Varianten von Figur 1 und 2 möglich und nützlich.

Figur 4 zeigt die eingangs erwähnte Variante einer Fördereinrichtung (11), die zusätzlich mindestens einen Rahmenförderer (12) mit ein oder beidseits der Arbeitsstelle (4) befindlichen Aufnahmepositionen aufweist. Auch in diesem Fall ist es vorteilhaft, mit zwei Fördergeräten (13,14) zu arbeiten, wobei der Einsatz eines einzelnen Fördergerätes (13) aber ebenfalls möglich ist. Wie Figur 4 verdeutlicht, ist der auszutauschende Spannrahmen (2) vom Rahmenförderer (12) von der Arbeitsstelle (4) entfernt und in die linke Aufnahmeposition geschoben worden. Der Spannrahmen (2) kann hier direkt auf ein wartendes Fördergerät (14) übergeben werden. Alternativ kann er in eine Zwischenwarteposition gebracht und vom Rahmenförderer (12) gelöst werden. In der rechten Bildhälfte ist dargestellt, wie ein Fördergerät (13) einen Spannrahmen (3) aus dem Rahmenmagazin (10) entnimmt und in einer mehrfach gekrümmten Fahrbewegung zur rechten Aufnahmeposition des Rahmenförderers (12) bringt und dort an den Rahmenförderer (12) übergibt. Das Fördergerät (13) führt hierbei z.B. eine im wesentlichen Z-förmige Fahrbewegung aus.

Der Rahmenförderer (12) kann zwei nebeneinander liegende Aufnahmestellen für Spannrahmen (2,3) aufweisen. Er kann ferner eine Zustelleinrichtung (nicht dargestellt) besitzen, um den Spannrahmen (2,3) an die Arbeitsstelle (4) und die dortige Absteckung in einer im wesentlichen quer zur seiner sonstigen Fahrrichtung gerichteten Zustellbewegung zu übergeben. In einer solchen Zweiständigen Ausführung wird z.B. zum Rahmenwechsel ein neuer Spannrahmen (3) an der rechten Aufnahmeposition übernommen und zugleich der auszutauschenden Spannrahmen (2) mit der Zustelleinrichtung von der Arbeitsstelle (4) zurückgeholt. Anschließend schiebt der Rahmenwechsler (12) um eine Rahmenposition nach links, wodurch der aufgeladene neue Spannrahmen (3) in die Zustellposition vor der Arbeitsstelle (4) gebracht und zugleich der alte Spannrahmen (2) in die Aufnahmeposition zur Übergabe an das andere Fördergerät (14) gebracht wird. Das Fördergerät (14) transportiert dann den Spannrahmen (2) bei Bedarf zum Rahmenmagazin (10) zurück. Falls der gleiche Spannrahmen (2) als nächstes wieder benötigt wird, kann das Fördergerät (14) auch an der Aufnahmeposition verbleiben.

Die Fördergeräte (13,14) können wahlweise die linke oder rechte Aufnahmeposition des Rahmenförderers (12) anfahren und können ebenso beliebig Spannrahmen (2,3) zuführen oder für den Rücktransport aufnehmen.

Figur 4 verdeutlicht außerdem in der gleichen Draufsicht wie Figur 7 den omnidirektionalen Antrieb (31) und die Anordnung der Mecanum-Räder (15,16,17,18) im Rechteck, wobei sich die Räder (15,18) an der linken Längsseite und die Räder (16,17) an der rechten Längsseite befinden. An diesen Seiten können sich auch die Trageinrichtungen (25,26) befinden. Auch hier kann das Fördergerät (13,14) jeweils ein oder mehrere Trageinrichtungen (25,26) haben.

Für die Steuerung und Positionierung der Fördergeräte (13,14) können geeignete Steuermittel und Messeinrichtungen vorhanden sein. Z.B. können die Positionen der Fördergeräte (13,14) mit einem Ortungssystem, z.B. GPS, aufgenommen und verfolgt werden, welches sich an der Bearbeitungsstation (1) oder als übergreifendes System in einer Anlage mit mehreren Bearbeitungsstationen (1) befindet und als sogenanntes Hallen-GPS ausgebildet ist. Auch über Indexe, Induktionsschleifen, Bilderfassungen und -auswertungen wie Kameras und andere Hilfsmittel können die Gerätepositionen erfasst und verfolgt werden. Die Positionsinformationen werden einer Steuerung (nicht dargestellt) zugeführt, welche entsprechend der vorgegebenen Gerätefunktion die Fahrbefehle per Funk, Infrarot oder auf andere geeignete Weise an die Fördergeräte (13,14) und deren evtl. mitgeführte Steuerung übermittelt.

Abwandlungen der gezeigten Ausführungsformen sind in verschiedener Weise möglich. Die konstruktiven Ausbildungen der Fördergeräte (13,14), der omnidirektionelen Antriebe (31) und deren Teile sowie der motorischen Antriebseinheiten für die omnidirektionale Beweglichkeit können beliebig abgewandelt und variiert werden. Die Merkmale der beschriebenen Ausführungsbeispiele können beliebig untereinander kombiniert und auch vertauscht werden. Gleiches gilt für die verschiedenen Stationsvarianten und deren Komponenten.

Ferner sind Abwandlungen der Anlagen- oder Stationskonfiguration möglich. In der einfachsten und nicht dargestellten Ausführungsform ist ein einzelnes Fördergerät (13) vorhanden, welches für die Zustellung und Entfernung der Spannrahmen (2,3) oder anderer Werkzeuge an der Arbeitsstelle (4) dient. Dieses Fördergerät (13) kann nur eine Trageinrichtung oder Ladestelle (25) aufweisen und durch die reversierende Zustellbewegung ein Ein- und Ausfahren von Werkstücken auf der Transferlinie (5) an der Arbeitsstelle (4) ermöglichen.

In einer weiteren Abwandlung kann das einzelne Fördergerät (13) zwei oder mehr Trageinrichtungen oder Ladestellen (25,26) aufweisen und zwei oder mehr unterschiedliche Spannrahmen (2,3) oder Werkzeuge aufweisen. Das Fördergerät kann außerdem drei, vier oder mehr solcher Spannrahmen (2,3) in einer z.B. stehenden Anordnung aufnehmen und ein bewegliches Spannrahmenmagazin in der Art einer dreh- und fahrbaren Trommel bilden. Durch eine Fahr- und Drehbewegung werden die Spannrahmen (2,3) bei Bedarf und einem Typentausch der Werkstücke gewechselt. Ein solches fahrbares und omnidirektional bewegliches Rahmenmagazin kann mehrfach vorhanden sein. In diesem Fall kann außerdem auf ein stationäres Rahmen- oder Werkzeugmagazin (10) verzichtet werden.

In einer weiteren Variante zu den dargestellten Ausführungsbeispielen ist es möglich, das Rahmen- oder Werkzeugmagazin (10) wegzulassen und durch eine Beladeeinrichtung (nicht dargestellt) für Werkstücke zu ersetzen. Hierdurch können das oder die Fördergerät(e) (13,14) an der Beladestelle ein oder mehrere Werkstücke, z.B. Seitenwände von Fahrzeugkarosserien, mit ihren Spannrahmen (2,3) aufnehmen, zur Arbeitsstelle (4) oder zum Rahmenförderer (12) transportieren und dort übergeben. In diesem Fall können mehrere Fördergeräte (13,14) in einem Kreislauf zwischen der Beladestelle und der Arbeitsstelle (4) bzw. dem Rahmenförderer (12) bewegt werden.

### BEZUGSZEICHENLISTE

- 1: Bearbeitungsstation, Framingstation
- 2: Spannrahmen
- 3: Spannrahmen
- 4: Arbeitsstelle
- 5: Transferlinie
- 6: Bearbeitungseinrichtung, Roboter
- 7: Bearbeitungseinrichtung, Roboter
- 8: Bearbeitungseinrichtung, Roboter
- 9: Bearbeitungseinrichtung, Roboter
- 10: Rahmenmagazin
- 11: Fördereinrichtung für Spannrahmen
- 12: Rahmenförderer
- 13: Fördergerät, Flurfördergerät
- 14: Fördergerät, Flurfördergerät
- 15: Rad, Mecanum-Rad
- 16: Rad, Mecanum-Rad
- 17: Rad, Mecanum-Rad
- 18: Rad, Mecanum-Rad
- 19: Achse
- 20: Achse
- 21: Rollenkranz
- 22: Tragkonstruktion
- 23: Antrieb
- 24: Fahrgestell
- 25: Trageinrichtung, Ladestelle
- 26: Trageinrichtung, Ladestelle
- 27: Hubeinrichtung
- 28: Wechseleinrichtung
- 29: Gasse
- 30: Werkstück
- 31: omnidirektionaler Antrieb
- 32: Zustelleinrichtung

## Patentansprüche

1. Fördereinrichtung für bewegliche Werkzeuge (2,3), insbesondere Spannrahmen, an einer Bearbeitungsstation (1) für Werkstücke, insbesondere Karosseriebauteile, bei der die Fördereinrichtung (11) ein oder mehrere lenkbare und omnidirektional bewegliche Fördergeräte (13,14) aufweist, **dadurch gekennzeichnet, dass** die Fördereinrichtung (11) einen an eine Arbeitsstelle (4) an der Bearbeitungsstation (1) angebundenen Rahmenförderer (12) aufweist, wobei das Fördergerät (13,14) für den Rahmentransport zwischen einem Rahmenmagazin (10) und einem Rahmenförderer (12) vorgesehen ist.

2. Fördereinrichtung nach Anspruch 1, **dadurch gekennzeichnet, dass** auf dem Fördergerät (13,14) ein oder mehrere Bearbeitungseinrichtungen (8,9) angeordnet sind.

3. Bearbeitungsstation für Werkstücke, insbesondere Karosseriebauteile, wobei mehrere bewegliche Werkzeuge (2,3), insbesondere Spannrahmen, und eine Fördereinrichtung (11) hierfür vorgesehen sind, **dadurch gekennzeichnet, dass** die Fördereinrichtung (11) ein oder mehrere lenkbare und omnidirektional bewegliche Fördergeräte (13,14) aufweist.

4. Bearbeitungsstation nach Anspruch 3, **dadurch gekennzeichnet, dass** die Bearbeitungsstation (1) mindestens eine Arbeitsstelle (4) und ein oder mehrere Rahmenmagazine (10) aufweist.

5. Bearbeitungsstation nach Anspruch 3 oder 4, **dadurch gekennzeichnet, dass** die Fördereinrichtung (11) nach einem der Ansprüche 1 bis 2 ausgebildet ist.

6. Bearbeitungsstation nach Anspruch 3, 4 oder 5, **dadurch gekennzeichnet, dass** die Bearbeitungsstation (1) mindestens eine im Bereich der Arbeitsstelle (4) angeordnete Bearbeitungseinrichtung (6,7,8,9) aufweist.

7. Verfahren zum Befördern von beweglichen Werkzeugen (2,3), insbesondere Spannrahmen, an einer Bearbeitungsstation (1) für Werkstücke, insbesondere Karosseriebauteile, **dadurch gekennzeichnet, dass** die Werkzeuge (2,3) zumindest bereichsweise mit mindestens einem lenkbaren und omnidirektional beweglichen Fördergerät (13,14) transportiert werden.

8. Verfahren nach Anspruch 7, **dadurch gekennzeichnet, dass** die Werkzeuge (2,3) von dem Fördergerät (13,14) an eine Arbeitsstelle (4) der Bearbeitungsstation (1) oder an einen an einer Arbeitsstelle (4) angebundenen Rahmenförderer (12) zugestellt werden.

9. Verfahren nach Anspruch 7 oder 8, **dadurch gekennzeichnet, dass** die Werkzeuge (2,3) von dem Fördergerät (13,14) von einem Rahmenmagazin (10) oder einer Beladestelle zur Arbeitsstelle (4) oder zum Rahmenförderer (12) und zurück transportiert werden.

## Claims

1. Conveying device for movable tools (2, 3), in particular clamping frames, at a processing station (1) for workpieces, in particular vehicle body components, in which the conveying device (11) comprises one or more steerable and omnidirectionally movable conveying devices (13, 14), **characterised in that** the conveying device (11) comprises a frame conveyor (12) connected to a workstation (4) at the processing station (1), wherein the conveying device (13, 14) is provided for the frame transport between a frame magazine (10) and a frame conveyer (12).

2. Conveying device according to claim 1, **characterised in that** one or more processing devices (8, 9) are arranged on the conveying device (13, 14).

3. Processing station for workpieces, in particular vehicle body components, wherein a plurality of movable tools (2, 3), in particular clamping frames, and a conveying device (11) are provided for this, **characterised in that** the conveying device (11) comprises one or more steerable and omnidirectionally movable conveying devices (13, 14).

4. Processing station according to claim 3, **characterised in that** the processing station (1) comprises at least one workstation (4) and one or more frame magazines (10).

5. Processing station according to claim 3 or 4, **characterised in that** the conveying device (11) is configured according to one of claims 1 to 2.

6. Processing station according to claim 3, 4, or 5, **characterised in that** the processing station (1) comprises at least one processing device (6, 7, 8, 9) arranged in the region of the workstation (4).

7. Method for conveying movable tools (2, 3), in particular clamping frames, at a processing station (1) for workpieces, in particular vehicle body components, **characterised in that** the tools (2, 3) are transported at least in sections by at least one steerable and omnidirectionally movable conveying device (13, 14).

8. Method according to claim 7, **characterised in that** the tools (2, 3) are supplied by the conveying device (13, 14) to a workstation (4) of the processing station (1) or to a frame conveyor (12) connected to a workstation (4).

9. Method according to claim 7 or 8, **characterised in that** the tools (2, 3) are transported by the conveying device (13, 14) from a frame magazine (10) or a loading point to the workstation (4) or to the frame conveyor (12) and back.

## Revendications

1. Dispositif de convoyage pour des outils mobiles (2, 3), en particulier de cadres de fixation, à une station de traitement (1) pour pièces à usiner, en particulier pour des composants de carrosserie, dans lequel le dispositif de convoyage (11) présente un ou plusieurs appareils de manutention (13, 14) dirigeables et mobiles de manière omnidirectionnelle, **caractérisé en ce que** le dispositif de convoyage (11) présente un convoyeur de cadres (12) rattaché à un poste de travail (4) sur la station de traitement (1), l'appareil de manutention (13, 14) étant prévu pour le transport des cadres entre un magasin à cadres (10) et un convoyeur de cadres (12).

2. Dispositif de convoyage selon la revendication 1, **caractérisé en ce que** sur l'appareil de manutention (13, 14) sont agencés un ou plusieurs dispositifs de traitement (8, 9).

3. Station de traitement pour pièces à usiner, en particulier pour des composants de carrosserie, dans laquelle plusieurs outils mobiles (2, 3), en particulier des cadres de fixations, et un dispositif de convoyage (11) sont prévus à cet effet, **caractérisé en ce que** le dispositif de convoyage (11) présente un ou plusieurs appareils de manutention (13, 14) dirigeables et mobiles de manière omnidirectionnelle.

4. Station de traitement selon la revendication 3, **caractérisé en ce que** la station de traitement (1) présente au moins un poste de travail (4) et un ou plusieurs magasins à cadres (10).

5. Station de traitement selon la revendication 3 ou 4, **caractérisé en ce que** le dispositif de convoyage (11) est réalisé selon l'une des revendications 1 à 2.

6. Station de traitement selon la revendication 3, 4 ou 5, **caractérisé en ce que** la station de traitement (1) présente au moins un dispositif de traitement (6, 7, 8, 9) agencé dans la zone du poste de travail (4).

7. Procédé de convoyage d'outils mobiles (2, 3), en particulier de cadres de fixation, à une station de traitement (1) pour pièces à usiner, en particulier pour des composants de carrosserie, **caractérisé en ce que** les outils (2, 3) sont transportés au moins par zones avec au moins un appareil de manutention (13, 14) dirigeable et mobile de manière omnidirectionnelle.

8. Procédé selon la revendication 7, **caractérisé en ce que** les outils (2, 3) sont délivrés par l'appareil de manutention (13, 14) à un poste de travail (4) de la station de traitement (1) ou à un convoyeur de cadres (12) rattaché à un poste de travail (4).

9. Procédé selon la revendication 7 ou 8, **caractérisé en ce que** les outils (2, 3) sont transportés depuis l'appareil de manutention (13, 14), depuis un magasine à cadres (10) ou depuis un poste de chargement jusqu'au poste de travail (4) ou jusqu'au convoyeur de cadres (12) et en retour.
